# EUROPÄISCHE PATENTSCHRIFT

(11) **EP 1 872 857 B1**
(45) Veröffentlichungstag und Bekanntmachung des Hinweises auf die Patenterteilung: **29.07.2009**
(21) Anmeldenummer: 07110754.4
(22) Anmeldetag: 21.06.2007
(51) Int. Cl.: B02C 2/00, B02C 2/10

(54) **Verfahren zum Aufbrechen von Silikongranulat mit einem Schüttgutbrecher**
Method for breaking up silicon granules with a bulk material breaker
Procédé pour désagglomérer des granules de silicone avec un broyeur de matière en vrac

(30) Priorität: 29.06.2006 DE 102006030004
(43) Veröffentlichungstag der Anmeldung: 02.01.2008
(73) Patentinhaber: Wacker Chemie AG, 81737 München (DE)
(72) Erfinder: Wenzeis, Klaus, 84329 Wurmannsquick (DE); Schuster, Johann, 84547 Emmerting (DE); Stodulka, Jan, 84489 Burghausen (DE)
(74) Vertreter: Gössmann, Christoph Tassilo

(56) Entgegenhaltungen:
- EP-A1- 1 070 543
- JP-A- 8 047 650
- US-A- 2 893 649
- US-A- 4 040 570
- US-A- 6 123 279

## Beschreibung

Die Erfindung betrifft eine Verfahren zum Aufbrechen von Silikongranulat.

Bekannt sind Vorlagebehälter für Granulate und Anlagen zur Förderung wie Saugförderer z.B. Systeme der Firma Mann & Hummel oder mechanische Systeme, z.B. Förderspiralen oder Förderschnecken z.B. der Firma Brabender und Fördersysteme mit Druckluft z.B. Zellenradschleusen.

Material wird in Granulatform aufbereitet und in speziellen Großgebinden (Big Bags) abgepackt. Schon bei Lagerung bedingt durch das eigene Gewicht sowie durch die Vibrationen während des Transportes auf dem LKW verdichten sich die Pellets und verklumpen im Großgebinde zu großen Brocken.

Mit den bekannten Anlagen ist dann eine Förderung des Materials nicht mehr möglich. Beim Aufbrechen von z.B. verklumpten Silikongranulaten mit handelsüblichen Vorrichtungen plastifiziert das Material komplett irreversibel und kann dann nicht mehr gefördert werden.

Aufgabe der Erfindung ist es die Probleme des Standes der Technik zu lösen, insbesondere eine Verfahren zur Verfügung zu stellen, mit der zusammen gebackenes Schüttgut wieder vereinzelt wird.

Durch die Erfindung wird diese Aufgabe gelöst.

Die Erfindung löst das Problem des Aufbrechens von plastischen Massen (z.B. HTV-Kautschuk-Pellets) und ermöglicht einen nachgeschalteten, vollautomatischen Verarbeitungsprozess.

Eine nachgeschaltete neue Technologie sorgt dafür, dass die Pellets nach Entleerung in einen entsprechenden Vorlagebehälter wieder aufgebrochen werden und dann vollautomatisch gefördert werden können.

Gegenstand der Erfindung ist ein Verfahren zum Aufbrechen von Silikongranulat, **dadurch gekennzeichnet, dass** die Pellets nach Entleerung in einen entsprechenden Vorlagebehälter wieder aufgebrochen werden, indem sie in einen Schüttgutbrecher mit einem Gehäuse in Form einer Trommel mit zumindest einem Abscherfinger an der Innenwand, einen nach oben gerichteten Kegel, einen Spalt zwischen dem Kegel und der Gehäusewand sowie einen Auffangtrichter unter dem Kegel gefüllt werden und durch Rotation des Materials in der Trommel werden durch die scherende Wirkung der an der Trommelwand angebrachten Abscherfinger bzw. am Kegel angebrachten Abscherprofile die Brückenbildungen des Granulats aufgebrochen, wobei die aufgebrochenen Pellets durch einen Förderspalt in das Fördersystem fallen.

Das Gehäuse, das mit dem Schüttgut beschickt wird, hat vorzugsweise die Form einer Trommel, an der in vorzugsweise gleichmäßigen oder auch ungleichmäßigen Abständen, bevorzugt in gleichmäßigen Abständen Abscherfinger an der Trommelwand vorzugsweise im Winkel von 60° von 140°, bevorzugt 80 bis 110°, besonders bevorzugt 85° bis 95° zur Trommelwand angebracht, diese befinden sich vorzugsweise übereinander oder auch versetzt zu einander, wobei übereinander bevorzugt ist, über die Trommelwand verteilt. Besonders bevorzugt sind sie einander gegenüber an zwei, vier, sechs oder acht Stellen an der Trommelwand angebracht, wobei vier Stellen bevorzugt und zwei Stellen besonders bevorzugt sind. Die Abscherfinger haben vorzugsweise eine Länge von 6 % des Durchmessers der Trommel, bevorzugt 3 %, besonders bevorzugt 1,5% oder besonders bevorzugt in Kombinationen angewandt.

Bevorzugt weist die Trommel die Abscherfinger an der Innenwand in einer Höhe bis zur Füllguthöhe auf.

Im Inneren der Trommel befindet sich ein drehbarer Kegel, der in einem Auffangtrichter angeordnet ist. Der Kegel bildet zwischen zwei einander schneidenden Mantellinien des Kegels vorzugsweise einen Öffnungswinkel von 30° bis 60°.

Auf dem Kegel befinden sich vorzugsweise in gleichmäßigen oder auch ungleichmäßigen Abständen, bevorzugt in gleichmäßigen Abständen Abscherprofile auf dem Kegel angebracht, diese befinden sich vorzugsweise übereinander oder auch versetzt zu einander, wobei übereinander bevorzugt ist, über den Kegel verteilt. Bevorzugt sind 1, 2, 3, 4, 5, 6, 7, 8, 9, 10 Abscherprofile übereinander oder auch verteilt über den Kegel. Besonders bevorzugt sind zwei Abscherprofile übereinander. Die Abscherprofile haben vorzugsweise eine Länge von 6 % des Durchmessers des Kegels, bevorzugt 3%, besonders bevorzugt 1,5% oder besonders bevorzugt in Kombinationen angewandt. Die Abscherprofile weisen vorzugsweise einen Winkel von 60° bis 120° zur Kegelmantelfläche auf.

Der Schüttgutbrecher weist zwischen dem Auffangtrichter und dem Kegel einen Spalt auf, der in einer besonders bevorzugten Ausführungsform verstellbar ist, so dass er auf die Größe des jeweiligen Schüttguts eingestellt werden kann.

Zusätzlich weist der Schüttgutbrecher für das erfindungsgemäße Verfahren einen Antrieb für den Kegel auf, um ihn mit einer bestimmten Geschwindigkeit zu drehen. Die Drehgeschwindigkeit des Kegels wird vorzugsweise stufenlos einstellbar sein, in Abhängigkeit von Materialeigenschaften, Spalthöhe und benötigtem Materialvolumen. Vorzugsweise nimmt der erfindungsgemäße Schüttgutbrecher Materialmengen bis zu 1000 kg auf.

Das Aufbrechen der verklumpten Bestandteile im Schüttgutbrecher erfolgt folgendermaßen, während der Rotation des Materials in der Füllraum Trommel (1) werden durch die scherende Wirkung der an der Trommelwand (2) angebrachten Abscherfinger (4) bzw. am Kegel (3) angebrachten Abscherprofile (5) die Brückenbildungen des Granulats aufgebrochen. Die aufgebrochenen Pellets fallen durch einen variabel einstellbaren Förderspalt (6) in das Fördersystem. Wichtig ist die genaue Abstimmung der Rotationsgeschwindigkeit, meistens sind niedrige Drehzahlen zu wählen, und der Förderspaltbreite (6) auf das Material, um ein weiteres Verschmieren des Materials im Klumpenbrecher zu verhindern.

Das aufgebrochene Material wird im Fördersystem (Zwangsförderung mechanisch, oder durch Vakuum oder durch Druckluft) zum weiterverarbeitenden Aggregat (Extruder, Spritzgussmaschine oder ähnlichem) weitertransportiert und dort verarbeitet. Durch eine Füllstandsüberwachung (Min-Maxstand-Regelung oder ähnliches Prinzip) am Fördersystem wird ein weiteres Verklumpen der aus dem Brecher fallenden Pellets verhindert, wobei die Geschwindigkeit des Klumpenbrechers sowie des Fördersystems an den Regelkreis des abnehmenden Produktionsagregats gekoppelt sind. Es können dabei längere Förderstrecken zurückgelegt werden. Ebenso kann eine Verteilung des Materials auf verschiedene Verarbeitungsmaschinen erfolgen.

Vorzugsweise wird mit dem Schüttgutbrecher Silikongranulat aufgebrochen, es sind jedoch auch alle anderen plastischen Granulattypen möglich.

Durch den zusätzlichen Einsatz des neu entwickelten Brechwerkes ist eine vollautomatische Beschickung angekoppelter Verarbeitungssysteme (z.B. Spritzguss oder Extrusion) möglich.

### Figur 1

In Figur wird der Schüttgutbrecher für das erfindungsgemäße Verfahren gezeigt, wobei dieser eine Trommel (1) aufweist, an deren Wänden Abscherfinger (4) angebracht sind. In dieser Trommel (1) befindet sich der Kegel (3), der Abscherprofile (5) aufweist. Der Kegel (3) weist zischen Auffangtrichter (7) und Kegel (3) einen Förderspalt (6) auf, durch den die Pellets in den Auffangtrichter (7) fallen und durch die Auslassöffnung (8) herausfallen, der Kegel (3) wird vorzugsweise von einem Motor angetrieben.

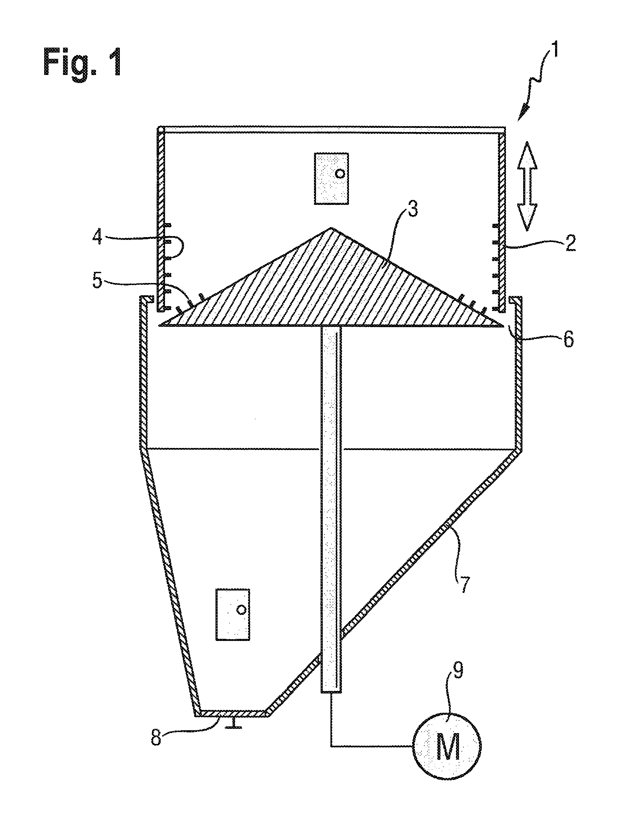

## Patentansprüche

1. Verfahren zum Aufbrechen von Silikongranulat, **dadurch gekennzeichnet, dass** die Pellets nach Entleerung in einen entsprechenden Vorlagebehälter wieder aufgebrochen werden, indem sie in einen Schüttgutbrecher mit einem Gehäuse in Form einer Trommel (1) mit zumindest einem Abscherfinger (4) an der Innenwand, einen nach oben gerichteten Kegel (3), einen Spalt (6) zwischen dem Kegel und der Gehäusewand sowie einen Auffangtrichter (7) unter dem Kegel gefüllt werden und durch Rotation des Materials in der Trommel werden durch die scherende Wirkung der an der Trommelwand (2) angebrachten Abscherfinger (4) bzw. am Kegel (3) angebrachten Abscherprofile (5) die Brückenbildungen des Granulats aufgebrochen, wobei die aufgebrochenen Pellets durch einen Förderspalt in das Fördersystem fallen.

2. Verfahren zum Aufbrechen von Silikongranulat nach Anspruch 1, **dadurch gekennzeichnet, dass** die Trommel (1) Abscherfinger (4) an der Innenwand bis zur Füllguthöhe aufweist.

3. Verfahren zum Aufbrechen von Silikongranulat nach Anspruch 1 oder 2, **dadurch gekennzeichnet, dass** der Schüttgutbrecher auf dem Kegel (3) zwei Abscherprofile (5) aufweist.

4. Verfahren zum Aufbrechen von Silikongranulat nach einem der Ansprüche 1 bis 3, **dadurch geknnzeichnet, dass** der Spalt zwischen dem Kegel (3) und der Gehäusewand (2) verstellbar ist.

5. Verfahren zum Aufbrechen von Silikongranulat nach einem der Ansprüche 1 bis 4, **dadurch gekennzeichnet, dass** der Schüttgutbrecher Materialmengen bis zu 1000 kg aufnehmen kann.

## Claims

1. Method for breaking up silicon granulate, **characterized in that** the pellets, after having been emptied into an appropriate receiving vessel, are broken up again by pouring them into a bulk material breaker, having a housing in the form of a drum (1) having at least one shearing finger (4) on the internal wall, an upwardly directed cone (3), a gap (6) between the cone and the housing wall, and a collecting hopper (7) beneath the cone, and by rotation of the material in the drum, the bridgings of the granulate are broken up by the shearing effect of the shearing fingers (4) attached to the drum wall (2) and the shearing profiles (5) attached to the cone (3), the broken-up pellets falling through a feed gap into the conveyor system.

2. Method for breaking up silicon granulate according to Claim 1, **characterized in that** the drum (1) has shearing fingers (4) on the internal wall up to the filling material height.

3. Method for breaking up silicon granulate according to Claim 1 or 2, **characterized in that** the bulk material breaker has on the cone (3) two shearing profiles (5).

4. Method for breaking up silicon granulate according to one of Claims 1 to 3, **characterized in that** the gap between the cone (3) and the housing wall (2) is adjustable.

5. Method for breaking up silicon granulate according to one of Claims 1 to 4, **characterized in that** the bulk material breaker can receive material quantities up to 1000 kg.

## Revendications

1. Procédé pour désagglomérer un granulat de silicone, **caractérisé en ce que** les pellets sont à nouveau désagglomérés après vidage dans un réservoir correspondant, **en ce qu'**ils sont introduits dans un concasseur de matériau en vrac présentant un châssis en forme de tambour (1) avec au moins un doigt de cisaillement (4) sur la paroi interne, un cône (3) orienté vers le haut, une fente (6) entre le cône et la paroi du châssis ainsi qu'un entonnoir de récupération (7) sous le cône et, par la rotation du matériau dans le tambour, les ponts formés dans le granulat sont cassés par l'effet de cisaillement des doigts de cisaillement (4) attachés à la paroi du tambour (2) ou des profilés de cisaillement (5) attachés au cône (3), les pellets désagglomérés tombant au travers d'une fente de transport dans le système de transport.

2. Procédé pour désagglomérer un granulat de silicone selon la revendication 1, **caractérisé en ce que** le tambour (1) présente des doigts de cisaillement (4) sur la paroi interne jusqu'à la hauteur du matériau de remplissage.

3. Procédé pour désagglomérer un granulat de silicone selon la revendication 1 ou 2, **caractérisé en ce que** le concasseur de matériau en vrac présente, sur le cône (3), deux profilés de cisaillement (5).

4. Procédé pour désagglomérer un granulat de silicone selon l'une quelconque des revendications 1 à 3, **caractérisé en ce que** la fente entre le cône (3) et la paroi du châssis (2) est réglable.

5. Procédé pour désagglomérer un granulat de silicone selon l'une quelconque des revendications 1 à 4, **caractérisé en ce que** le concasseur de matériau en vrac peut recevoir des quantités de matériau jusqu'à 1000 kg.
